## Europäisches Patentamt
## European Patent Office
## Office européen des brevets

(19)

(11) Numéro de publication: **0 140 729**
**B1**

(12) # FASCICULE DE BREVET EUROPÉEN

(45) Date de publication du fascicule du brevet:
**27.04.88**

(51) Int. Cl.⁴: **A 23 G 1/10,** A 23 G 1/04

(21) Numéro de dépôt: **84401715.2**

(22) Date de dépôt: **24.08.84**

(54) **Procédé et installation de préparation d'une pâte de chocolat.**

(30) Priorité: **26.08.83 FR 8313769**

(43) Date de publication de la demande:
**08.05.85 Bulletin 85/19**

(45) Mention de la délivrance du brevet:
**27.04.88 Bulletin 88/17**

(84) Etats contractants désignés:
**AT BE CH DE FR GB IT LI LU NL SE**

(56) Documents cité:
**DE-A-2 238 519**
**DE-A-2 341 639**
**DE-C-260 305**
**DE-C-288 770**
**FR-A-616 817**
**FR-A-953 602**
**FR-A-969 933**
**FR-A-993 106**
**FR-A-1 060 792**
**FR-A-1 128 377**
**FR-A-1 567 475**
**FR-A-2 017 696**
**FR-A-2 222 020**
**GB-A-625 314**
**NL-C-111 756**
**US-A-2 313 705**
**US-A-2 711 964**
**US-A-2 723 422**

(73) Titulaire: **CLEXTRAL, 15 rue Pasquier, F-75008 Paris (FR)**

(72) Inventeur: **Chaveron, Henri, 3 rue des Pyramides, F-75001 Paris (FR)**
Inventeur: **Pontillon, Jean Rés. des Annonciades, A 54 rue de la Pierre à Poisson, F-78250 Meulan (FR)**
Inventeur: **Billon, Michel, 41 rue Emile Zola, F-42240 Unieux (FR)**
Inventeur: **Adenier, Hervé, 67 boulevard des Etats-Unis, F-60200 Compiègne (FR)**
Inventeur: **Kamoun, Ahmed, Cité Jardin Bloc C3, Sfax (TN)**

(74) Mandataire: **Moncheny, Michel, c/o Cabinet Lavoix 2 Place d'Estienne d'Orves, F-75441 Paris Cedex 09 (FR)**

EP 0 140 729 B1

## Description

L'invention a pour objet un procédé et une installation de préparation d'une pâte de chocolat.

Généralement, pour réaliser du chocolat fondant, on commence par préparer une pâte de cacaco que l'on mélange avec du sucre préalablement broyé jusqu'à une granulumétrie très faible, de l'ordre de 100 microns. La pâte de cacaco et le sucre, et éventuellement, dans le cas de chocolat au lait, la poudre de lait deshydraté, sont mélangés dans des proportions convenables avec un minimum de beurre de cacao et la pâte de chocolat ainsi préparée subit ensuite un raffinage dans un dispositif constitué d'une pluralité de cylindres, généralement cinq, entre lesquels la granulométrie des particules est encore réduite jusqu'à obtention d'une pâte raffinée se présentant sous forme de paillettes ou de poudre très fine, de l'ordre de 10 à 20 microns, qui peut alors être mélangée avec une proportion déterminée de beurre de cacao.

Pour la réalisation de chocolat de qualité, la pâte raffinée est soumise au procédé connu depuis longtemps sous le nom de conchage et qui consiste à faire subir à la pâte un malaxage prolongé, réalisé dans des cuves spéciales appelées conches. C'est au cours de ce traitement de conchage que s'achève la réalisation de l'arôme et que l'on obtient les propriétés rhéologiques souhaitées du chocolat.

D'une façon générale, on admet que le traitement de conchage permet de réaliser une dispersion des particules de sucre et de cacao dans une phase grasse continue constituée d'une part des matière grasses extraite du cacao grâce à l'échauffement et aux effets du malaxage produit dans la conche, et d'autre part du beurre de cacao ou d'autres adjuvants incorporés dans la pâte. On effectue en même temps une oxydation et un dégazage avec transfert vers l'atmosphère de vapeur d'eau et de composés volatils indésirables tels que des acides, aldéhydes, cétones. Il en résulte d'autre part une diminution de la viscosité et de la limite d'écoulement et l'on obtient finalement une pate fluide onctueuse qui peut être facilement moulée.

Le principal perfectionnement apporté à ce traitement très ancien consiste à réaliser le conchage en deux étapes, la première dite de conchage à sec qui consiste à malaxer la pâte de cacao seule ou avec une faible quantité de beurre de cacao et la seconde dite de conchage liquide, ou de liquéfaction, au cours de laquelle on incorpore à la pâte la majeure partie du beurre de cacao. Ces deux étapes sont réalisées dans des conches séparées ou en deux temps dans la même conche et sur des quantités importantes de pâte et demandent chacune un temps très long, de plusieurs dizaines d'heures. Il en résulte donc une discontinuité de la chaîne de préparation du chocolat et en outre, du fait de la longueur du traitement, une dépense importante d'énergie.

On a essayé depuis longtemps de modifier le traitement de préparation du chocolat pour le rendre continu et plus rapide. Cependant, jusqu'à présent, on a plutôt cherché à supprimer purement et simplement le conchage en le remplaçant par des traitements permettant de réaliser la liquéfaction et de développer l'arôme par d'autres moyens, généralement chimiques. Si l'on a réussi à rendre le procédé continu, en revanche le remplacement du traitement mécanique par un traitement chimique n'a pas apporté une véritable économie.

Il existe cependant des procédés dans lesquels la préparation de la pâte de chocolat et notamment sa liquéfaction sont réalisées mécanique ment et de façon continue.

Le brevet FR-A-1 567 475, par exemple décrit un procédé et une installation de préparation en continu du chocolat en trois étapes successives :

Tout d'abord, les différents ingrédients, solides et liquides, sont amenés, en proportions conformes à la recette, dans un dispositif de pétrissage et malaxage constitué d'un transporteur à vis comprenant un fourreau allongé à l'intérieur duquel sont entraînées en rotation deux vis parallèles.

Le mélange ainsi effectué passe alors dans un appareil de liquéfaction constitué d'une pompe tournant à grande vitesse et permettant, par effet de cisaillement, d'obtenir une pâte de faible viscosité. Celle-ci passe alors dans un dispositif de dégazage constitué d'un transporteur à vis dont la pâte est entraînée par les vis de grande longueur surmontées d'une coupole dans laquelle on fait le vide.

Une telle installation permet donc de remplacer les dispositifs de raffinage classiques ainsi que les conches, mais on doit opérer, dès le départ, sur l'ensemble des ingrédients du mélange et notamment le beurre de cacao et la liquéfaction est obtenue par un effet de centrifugation que l'on peut considérer comme trop brutal. Il en est de meme dans la plupart des installations connues de préparation du chocolat en continu.

Or la préparation du chocolat et notamment le conchage sont des opérations délicates à maitriser pour obtenir un chocolat de qualité suivie et l'on a donc continué, le plus souvent, à employer le processus traditionnel de préparation, malgré ses inconvénients.

On connaît également dans le brevet FR-A-1 128 377 une machine pour liquéfier les masses de chocolat qui proviennent d'un laminoir pour être ensuite amenées dans une conche. Cette machine pour liquéfier, mélanger et pétrir des masses de chocolat comprend un arbre chauffable pourvu d'éléments de mélange et de transport tournant dans une chambre chauffable dans laquelle sont fixés des éléments de mélange coopérant avec ceux de l'arbre depuis l'ouverture d'entrée jusqu'à l'ouverture de sortie de la chambre.

D'autre part, le brevet DE-C-288 770 décrit un appareil de raffinage d'une masse de chocolat comportant des presses à vis dont les filets sont munis de fines fentes permettant d'effectuer un triturage de la matière. Cette trituration sous pression de la matière provoque un raffinage des grains, une amélioration de la qualité et le développement de l'arôme. A la sortie de la machine qui comprend plusieurs presses à vis, la matière passe par de fines ouvertures sous forme de fils fins qui sont soumis à un courant d'air permettant de la chauffer ou de la refroidir afin d'améliorer l'arôme.

L'invention a pour objet un nouveau procédé et une installation permettant de préparer le chocolat d'une façon continue et en un temps très court tout en respectant les modalités essentielles du procédé traditionnel et en obtenant un produit de qualité tout à fait comparable.

En outre, les conditions dans lesquelles le conchage est réalisé selon l'invention peuvent être adaptées à toutes les formules, notamment de chocolat au lait et permettent d'obtenir facilement les propriétés rhéologiques souhaitées, de la même façon que dans un traitement de conchage réalisé de façon traditionnelle en deux étapes successives de conchage à sec et de conchage liquide.

Conformément à l'invention, on réalise dans le transporteur à vis un traitement de conchage à sec de la pâte raffinée comprenant une première étape de simple malaxage de la pâte raffinée avec élévation de température puis au moins une seconde étape de malaxage avec production d'effets de laminage et de cisaillement dont l'intensité augmente progressivement, chaque étape de malaxage comprenant une section de compression et une section de freinage suivie d'une étape de dégazage, l'intensité desdits effets de laminage et de cisaillement étant déterminée de telle sorte que les moyens de réglage de la température de la matière permettent de maintenir cette dernière au niveau optimal de conchage et de conserver la granulométrie, puis on soumet la pâte obtenue à un traitement de conchage liquide réalisé par effets combinés de malaxage, laminage et cisaillement et à température contrôlée au niveau optimal de conchage, dans une étape supplémentaire du transporteur à vis dans laquelle sont introduites les quantités nécessaires de beurre de cacao et d'additifs.

Les vis etant composées de tronçons juxtaposés de caractéristiques différentes déterminant des effets différents, il est possible, pour une pâte raffinée donnée et de qualité homogène et pour une vitesse moyenne de rotation des vis, de déterminer empiriquement, par des essais successifs, la composition, la longueur et le nombre des zones de traitement, de telle sorte que la température de la matière puisse être maintenue en chaque point au niveau voulu par l'effet combiné de l'autoéchauffement dû aux frottements et d'une régulation de la température du transporteur à vis; la qualité du traitement peut être vérifiée en permanence en contrôlant d'une part le dégagement par les zones de dégazage de l'eau et des arômes indésirables et d'autre part le goût et la granulométrie de la pâte à la sortie du transporteur à vis; on peut ensuite produire en continu une pâte de qualité contrôlée en jouant sur la vitesse de rotation des vis et sur la régulation de temperature.

L'invention a également pour objet une installation de préparation en continu de la pâte de chocolat dans laquelle le transporteur à vis constitue, en aval des moyens de raffinage, un circuit de production continue comprenant un moyen de conchage à sec de la pâte raffinée et un moyen de conchage liquide par incorporation d'adjuvants dont la nature et les proportions correspondent à la recette, le transporteur à vis étant alimenté en continu par un débit déterminé de pâte raffinée jusqu'au degré de granulométrie nécessaire pour le produit fini et comprenent, de l'amont a l'aval, une zone d'alimentation et de malaxage préliminaire munie de moyens de chauffage de la pâte et au moins une zone de traitement munie de moyens de laminage et de cisaillement dont l'efficacité augmente progressivement et de moyens de régulation de la température, chaque zone de traitement comprenant une section de compression et une section de freinage suivie d'une zone de degazage, puis d'une zone de traitement finale du transporteur à vis réalisée par effets combinés de malaxage, laminage et cisaillement, et placée en aval de la dernière zone de dégazage et à l'entrée de laquelle le fourreau est muni d'au moins un orifice d'introduction des adjuvants de liquéfaction.

Mais l'invention sera mieux comprise par la description détaillée d'une installation selon l'invention, représentée sur les dessins annexés, et de certains exemples de réalisation.

La Figure 1 représente schématiquement l'ensemble d'une installation, selon l'invention, de préparation d'une pâte de chocolat.

La Figure 2 est une vue de dessus, en coupe axiale, d'un transporteur à vis pour la mise en oeuvre du procédé.

Les Figures 3 et 4 sont des vues en coupe, respectivement selon les lignes III-III et IV-IV de la Figure 2.

La Figure 5 est une vue de côté, en coupe par l'axe d'une vis, d'un second exemple de réalisation de l'invention.

La Figure 6 est une vue en coupe, selon VI-VI, de la Figure 5.

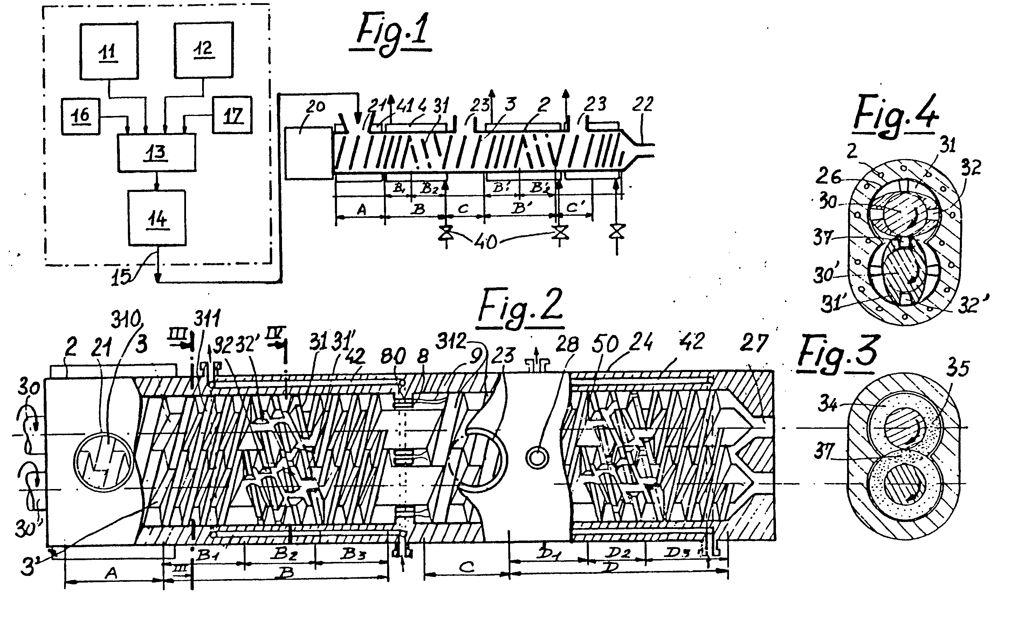

Sur la Fig. 1, on a représenté schématiquement une installation classique 1 de préparation d'une pâte de chocolat. Le cacao et le sucre pulvérisés sont tout d'abord broyés séparément dans des dispositifs 11 et 12, puis mélangés dans un mélangeur pétrisseur 13, jusqu'à obtention d'une pâte relativement fluide. En cas de besoin, une petite quantité de beurre de cacao ou d'autres additifs peut être ajoutée par des doseurs 16 et 17. Le mélange ainsi préparé passe alors dans un dispositif de raffinage 14 constitué, le plus souvent, d'un broyeur à cinq cylindres et l'on obtient à la sortie 15 une pâte raffinée jusqu'au degré de granulométrie voulu, par exemple de l'ordre de 15 à 20 micromètres.

Dans les procédés classiques, la pâte ainsi raffinée est soumise à un conchage qui permet d'améliorer notamment la saveur et l'onctuosité de la pâte en la soumettant simultanément à une oxydation et à un malaxage pendant un temps très long, par exemple de 24 à 72 heures. Généralement, on procède tout d'abord à un conchage à sec, c'est à dire pratiquement sans addition de beurre de cacao, puis à un conchage liquide qui permet de réaliser la liquéfaction de la pâte par incorporation de beurre de cacaco ou d'autres adjuvants dans la proportion voulue.

Selon la caractéristique essentiel le du procédé, le conchage à sec est réalisé en continu dans un transporteur à vis 2 qui a été représenté schématiquement sur la figure 1 et en détail sur la figure 2.

Le transporteur à vis 2 comprend au moins deux vis 3 à axes parallèles, entraînées en rotation par un dispositif 20 à l'intérieur d'un fourreau allongé muni à son extrémité amont, dans le sens de transport des vis, d'une trémie d'alimentation 21 et à son extrémité aval d'un orifice de sortie tel qu'une filière 22.

La matière introduite par la trémie 21 est transportée vers l'aval par la rotation des vis qui fonctionnent comme une pompe. En même temps, elle est soumise à un malaxage dans des conditions qui dépendent des caractéristiques des filets et notamment de leur pas et de leur profondeur.

Par ailleurs, en chauffant ou en refroidissant le fourreau, il est possible d'agir sur la température de la matière grâc à l'effet d'entraînement de celle-ci en couche mince le long des vis, ce qui favorise les échanges thermiques.

On peut ainsi distinguer, de l'amont à l'aval, plusieurs étapes de traitement à l'intérieur du transporteur à vis.

Dans la partie amont A, les vis 3 sont munies de filets 310 à pas large permettant d'entraîner rapidement vers l'aval la matière introduite par la trémie 21 en la soumettant à un simple malaxage sans compression. Dans cette zone, le fourreau est muni de moyens de chauffage 41 constitués par exemple de manchons chauffés électriquement ou bien d'enceintes parcourues par un fluide caloporteur. La matière est donc soumise à une élévation de température bien répartie dans la masse par l'effet du malaxage, et qui en diminue la viscosité. On peut ainsi faire monter rapidement la température de la matière jusqu'au niveau habituel pour le conchage, c'est-à-dire de l'ordre de 90°C pour le chocolat noir.

La matière passe ensuite dans une seconde zone B de malaxage où se produisent des effets de laminage et de cisaillement dont l'intensité augmente progressivement. A cet effet, les vis peuvent être constituées, par exemple, d'une première section B1 constituée de filets 311 dont le pas se resserre et d'une seconde section B2 dans laquelle le pas des filets 31 détermine un freinage de la matière et par conséquent une compression progressive à l'aval de la section B1. Cette augmentation de pression détermine des effets croissants de laminage et de cisaillement qui dépendent de la composition des vis 3 et qui entraînent une élévation de température de la matière par auto-échauffement. Cette élévation de température est compensée par un refroidissement du fourreau 2 qui peut, par exemple, être entouré d'une enceinte 4 dans laquelle on fait passer un fluide de refroidissement. En réglant, par exemple, le débit du fluide par des moyens 40, il est possible d'assurer une régulation de température permettant de maintenir la temperature de la matière au niveau atteint à la sortie de la zone de chauffage A, c'est à-dire à la température de conchage.

La matière passe alors dans une zone de dégazage C dans laquelle les filets 312 ont un pas élargi; de plus, le fourreau est muni dans cette zone d'au moins un orifice qui s'ouvre largement sur les vis et qui met l'intérieur du fourreau en communication avec l'atmosphère ou une enceinte mise sous un certain vide. On peut aussi faire circuler à l'intérieur du fourreau un gaz de balayage. La vapeur d'eau et les composés volatils dégagés sont ainsi immédiatement évacués et l'on peut contrôler cet effet de dégazage à la sortie de l'orifice 23 et vérifier en même temps l'efficacité du traitement et le maintien de la température au niveau voulu. La matière peut alors passer dans une seconde zone de traitement B' suivie d'une seconde zone de dégazage C'.

Sur la figure 2 on a représenté plus en détail un transporteur à vis pour la mise en oeuvre du procédé.

Les deux vis 3 et 3' sont constituées, de façon connue, d'éléments juxtaposés ayant des filetages différents et enfilés sur des arbres 30 et 30' entraînés en rotation par le moteur 20 et munis de cannelures qui permettent de transmettre le mouvement de rotation aux éléments de vis. De préférence, les arbres 30 et 30' sont entraînés en rotation dans le même sens, les vis 3 et 3' étant munies de filetages identiques qui engrènent l'un dans l'autre.

Grâce à cette disposition, il est possible lors de la mise au point d'un traitement, de faire varier assez rapidement la composition des vis si l'on dispose d'éléments de vis 3 et 3' dont les caractéristiques telles que la longueur, la profondeur et le pas des filets, peuvent varier. En particulier, dans l'exemple représenté, la section d'alimentation A sera constituée de filets 310 à pas large et la section de compression B1 de filets 311 à pas resserré. La section de freinage B2 comportera des filets 31 à pas inversé ayant donc tendance à repousser la matière vers l'amont et, par conséquent, à s'opposer à sa progression normale vers l'aval, ce qui détermine une compression dans la section B1.

Sur la figure 4, qui est une coupe transversale dans la section à pas inversé B2, on voit que les filets 31, 31' des deux vis 3, 3' sont munis d'ouvertures 32, 32' formant des fenêtres qui s'étendent radialement entre l'arbre 30 et la périphérie du filet. Ces ouvertures permettent donc le passage vers l'aval d'une certaine quantité de matière sous l'effet de la pression, ce passage s'effectuant principalement dans la zone centrale où les vis engrènent l'une dans l'autre si l'on prend la précaution de caler les éléments de telle sorte que les fenêtres 32, 32' viennent deux à deux en coïncidence dans la zone centrale 37 avec une périodicité qui dépend du nombre de fenêtre par tour.

Dans les zones peu comprimées telles que la zone d'alimentation A, la matière a tendance à être entraînée en rotation autour des arbres avec les filets, dans le sens de rotation des vis. En arrivant dans la zone d'engrènement 37, lorsque les vis tournent dans le même sens, la matière se trouvant dans un filet tend à passer sur la périphérie de l'autre vis mais, du fait de l'engrènement, la section de passage est resserrée puisqu'à cet endroit les filets pénètrent l'un dans l'autre. Il en résulte donc une compression de la matière en amont et chaque filet comprend un secteur décomprimé 34 et un secteur comprimé 35. Cette alternance, à l'intérieur d'un même filet, de zones comprimées et décomprimées, favorise le malaxage de la matière. Par ailleurs, le passage d'une vis à l'autre dans la zone d'engrènement 37 détermine un certain effet de laminage qui augmente d'intensité au fur et à mesure que la matière avance vers l'aval, les secteurs comprimés 35 augmentant alors d'importance et finissant par remplir totalement le filet. Lorsque la pression augmente, la matière a également tendance à passer entre les têtes de filets et la paroi interne 26 du fourreau qui sont séparées par un jeu supérieur à la dimension des particules solides. Il en résulte également un effet de laminage et de cisaillement dans les zones comprimées.

Mais les effets de laminage et surtour de cisaillement se produisent principalement dans la zone à pas inversé B2, notamment au passage dans les fenêtres. En jouant sur la longueur et les pas des différents éléments juxtaposés constituant les vis, on peut faire varier l'intensité des effets de laminage et de cisaillement auxquels la matière est soumise et par conséquent l'élévation de température qui en résulte par l'effet d'auto-échauffement dû aux frottements. Cet échauffement est déterminé de façon à pouvoir être compensé par la régulation de température du fourreau avec lequel la matière est au contact sur une grande surface surtout lorsque les filets ne sont pas très profonds. A cet effet, comme on l'a représenté sur la figure 2, il est avantageux de percer dans le fourreau un ensemble de canaux 42 qui s'étendent sur toute la longueur de la zone de traitement B. En faisant circuler un fluide caloporteur, tel que de l'eau froide, dans les canaux 42, avec un débit variable réglé par des moyens 40, on peut assurer la régulation de la température de la matière de telle sorte que celle-ci soit maintenue au niveau désirable pour le conchage, de l'ordre de 90°C pour le chocolat noir, et en tout cas ne dépasse pas 120°C. Le chauffage s'effectuant sous pression et dans un temps plus court, il peut en effet être avantageux de soumettre la matière à une température légèrement plus forte que dans les conches classiques, au moins dans le cas du chocolat noir, pour accélérer le traitement et favoriser notamment la déshydratation et le dégazage.

Etant donné que les frottements et par conséquent l'échauffement qui en résulte diminuent avec la viscosité qui diminue elle-même avec l'élévation de température, on va pouvoir augmenter progressivement les effets de laminage et de cisaillement subis par la matière au cours de son transport dans la zone de traitement au fur et à mesure de la diminution de viscosité en jouant sur les conditions d'avancement de la matière. Pour une pâte donnée, il va donc être possible de déterminer empiriquement, par des essais successifs, la composition de vis qui permettra, pour une vitesse moyenne de rotation des vis et pour un débit moyen de fluide caloporteur dans les canaux 42, d'assurer un maximum de malaxage tout en maintenant la température à un niveau sensiblement constant.

L'effet de laminage et de cisaillement obtenu spécialement dans la zone à pas inversé B2 peut être renforcé éventuellement par une extrusion réalisée à la sortie de la zone de traitement B. A cet effet celle-ci comprend, dans l'exemple représenté, une troisième zone B3 à pas resserré qui reprend la matière sortant de la zone de freinage B2 pour la faire passer à travers des filières constituées par exemple par des orifices 80 ménagés dans un diaphragme 8. On produit ainsi une pluralité de filaments 9 qui débouchent dans une enceinte de dégazage constituée, de façon très simple, par la section C du transporteur à vis dans laquelle celles-ci ont un pas élargi et passent devant un orifice de dégazage 23. Dans la zone C à pas élargi, la matière subit un léger malaxage sans compression qui permet de renouveler les parties en contact avec l'atmosphère ou un gaz de balayage cir culant dans le fourreau. Il se produit également à la sortie des filières 80, une détente de la matière et une vaporisation des composés volatils et notamment de la vapeur d'eau dissoute sous pression dans la pâte.

On observera également que, dans la zone d'alimentation A où les filets ne sont pas complètement remplis, l'air peut pénétrer par l'orifice 21 et remonter dans les zones décomprimées 34 en passant entre la périphérie des filets et la paroi interne du fourreau. Ainsi, pendant tout le processus de compression progressive, la matière est malaxée en présence d'air et peut en entraîner une partie qui reste dissoute sous l'effet de la pression dans les zones comprimées. Par ailleurs, la matière entraînée dans les filets en couches minces subit une sorte de retournement au passage d'une vis à l'autre et il en résulte un contact intime de la pâte avec l'air ou le gaz se trouvant dans les zones décomprimées.

On réalise ainsi à l'intérieur du transporteur à vis un ensemble 35 de phénomènes qui s'apparentent au conchage et qui, en tout cas, permettent d'en obtenir les effets. Grâce à l'élévation de température due tout d'abord au chauffage du fourreau puis à l'effet du travail mécanique et des frottements, les globules des phases grasses contenus dans le cacao se fluidifient et, grâce au malaxage intense et aux effets de laminage et de cisaillement, ont tendance à migrer en surface et à enrober les particules solides de cacao et de sucre. D'autre part, le malaxage en présence d'air et l'entraînement d'une certaine partie de celui-ci favorisent l'oxydation de la pâte et le dégazage ultérieur avec évaporation de l'eau et des composés volatils indésirables et développement de l'arôme.

L'avantage du procédé selon l'invention est, grâce aux particularités du transporteur à vis qui vient d'être décrit, de pouvoir soumettre la pâte raffinée à des effets de laminage et de cisaillement intenses tout en contrôlant la température pour la maintenir au niveau optimal de conchage. On arrive ainsi à réaliser un traitement tout à fait analogue au conchage à sec, c'est à dire à réaliser la fluidification de la pâte avec la matière grasse contenue dans le cacao, sans addition de beurre de cacao.

Par ailleurs, comme dans le procédé de conchage classique, l'oxydation de la pâte et le dégazage sont effectués en même temps que le malaxage et permettent de contrôler l'avancement du traitement. En effet, grâce à l'utilisation d'une machine à plusieurs vis, le transport de la matière peut se faire à la pression atmosphérique et il est possible, par analyse ou simplement par l'odeur, de contrôler directement, par les orifices 23, l'efficacité du dégazage, la température et la qualité de la pâte, en effectuant éventuellement des prélèvements. On peut notamment vérifier que la pâte ne prend pas une odeur ou un goût de brûlé et que la granulométrie conférée au raffinage est conservée. En surveillant ainsi le processus de traitement, on peut arriver, empiriquement, à déterminer le profil des vis et notamment le pas, la longueur et le nombre des sections de traitement pour obtenir une pâte conchée à sec à la température voulue.

Dans le mode de réalisation particulièrement avantageux représenté sur la figure 2, la liquéfaction de la pâte est réalisée dans une section supplémentaire D du transporteur à vis. A cet effet, le fourreau 2 de ce dernier est prolongé par une partie 24 entourant des prolongements 50 des deux vis 3 et 3'. Celles-ci comprennent une section de compression progressive D1, pacée à la suite de la section de dégazage C, une section de freinage D2 dans laquelle les filets ont un pas inversé et sont munis d'ouvertures de passage, et une section d'homogénéïsation et de compression D3, à pas resserré, précédant des filières 27 placées à l'extrémité aval du fourreau 24, chacune dans l'axe d'une vis.

La matière sortant de la section de dégazage C est entraînée directement par les vis dans la section D1, celle-ci étant muni d'un orifice 28 débouchant à l'intérieur du fourreau et par lequel on introduit sous pression une quantité dosée de beurre de cacao. Celui-ci se mélange rapidement avec la pâte fluidifiée précédemment par conchage à sec et l'on obtient une pâte liquéfiée ayant la composition voulue à la sortie 27 du transporteur à vis. Dans la section D de liquéfaction, il faut également éviter une élévation de température et le fourreau est muni à cet effet de canaux 42 de circulation d'un fluide de refroidissement. En tout état de cause, étant donné la baisse du degré de viscosité de la pâte, les effets thermiques du malaxage sont moins importants.

Les conditions de fonctionnement ne dépendent pratiquement que des paramètres d'extrusion tels que vitesse de rotation et du diamètre des vis, pas à profondeur des filets, température du fourreau et se conservent dans le temps si les ingrédients de départ, c'est à dire la composition de la pâte raffinée ne sont pas modifiés. C'est pourquoi, pour une pâte raffinée donnée, après avoir déterminé empiriquement la composition des vis pour une vitesse moyenne de rotation et pour un débit moyen du fluide de refroidissement dans le fourreau, on peut continuer la production en jouant sur la vitesse de rotation des vis et sur la régulation de température, et en controlant la qualité de la pâte et l'efficacité du traitement par les orifices de dégazage et à la sortie du transporteur à vis.

En effet, étant donné la rapidité du traitement, on peut agir immédiatement sur la vitesse de rotation des vis et la régulation de température lorsqu'on constate un changement de qualité, le débit de la matière étant contrôlé simplement à l'extrémité d'entrée du transporteur à vis.

A titre d'exemple, on a traité par extrusion une pâte raffinée de chocolat noir ayant un taux de matière grasse de 26,6 % et une teneur en eau de 2 % et dont la composition était la suivante :

| | |
|---|---|
| sucre | 45 % |
| pâte de cacao | 40 % |
| beurre de cacao d'ajout. | 14 % |
| lécithine | 0,6 % |
| arôme | 0,1 % |

On a utilisé une extrudeuse à deux vis comprenant une zone de transport et de compression progressive suivie d'une zone de freinage comportant deux filets à pas inversés munis de fenêtres et d'une zone de sortie sans pression précédant deux filières de 6 mm centrées chacune sur l'axe d'une vis.

Pour une vitesse de rotation de 80 tours/minute, on a obtenu un débit de 30 kg/h. La température de sortie de la matière était limitée à 115°C par refroidissement du fourreau à une température de 70 à 80°C. La pâte a été ensuite soumise à une étape de conchage liquide par un malaxage avec la proportion voulue de beurre de cacao mais dont la durée a été réduite à 5 minutes. On a ainsi pu obtenir une pâte de chocolat ayant une viscosité de 1,1 Pa.s et une limite d'écoulement de 10 Pa. En réalisant le conchage à sec en deux étapes d'extrusion réalisées dans les mêmes conditions et suivies d'un conchage liquide de 5 minutes, la viscosité de la pâte obtenue était de 0,9 Pa.s et la limite d'écoulement de 6 Pa. De telles caractéristiques sont très comparables à celles d'une pâte de référence, ayant subi un traitement de conchage classique et qui, en partant de la même matière première, peut avoir une viscosité de 1 Pa.s et une limite d'écoulement de 5 Pa.

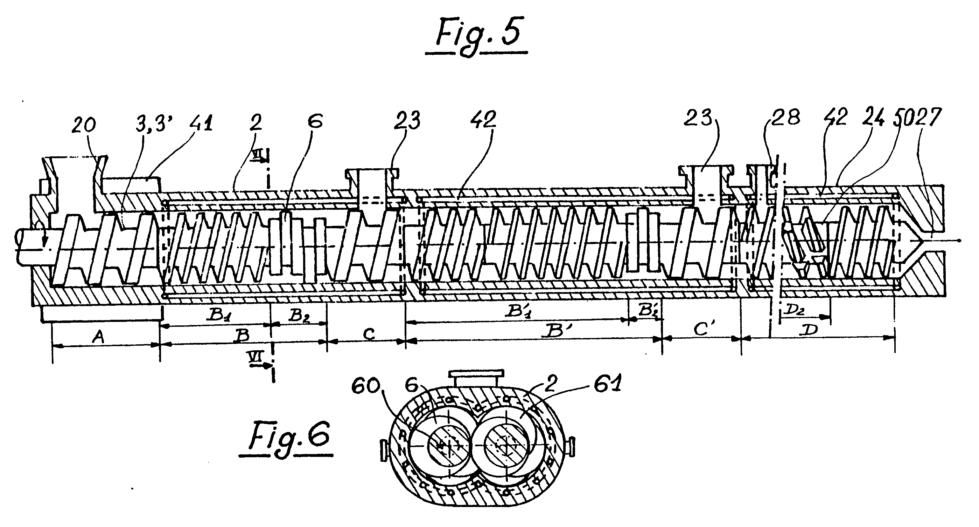

Dans certains cas, l'effet de laminage et de cisaillement provoqué par le passage des zones de freinage à pas inversé est trop brutal et détermine par auto-échauffement une élévation de température que l'on ne peut plus contrôler avec précision. C'est le cas, en particulier, pour la fabrication de chocolat au lait, qui est plus sensible que le chocolat noir aux effets de la température et ne doit pas dépasser une température de conchage de l'ordre de 70°C. En effet, compte tenu de la présence de lait en poudre dans la pâte raffinée, une élévation exagérée de température peut entraîner un goût de brûlé et la formation d'agglomérats de granulométrie supérieure à 30 micramètres et par conséquent sensible à la dégustation. Dans ce cas, les zones de freinage doivent être constituées d'éléments de vis provoquant des effets plus modérés et il est avantageux d'utiliser à cet effet des disques malaxeurs. C'est ce que l'on a représenté sur la figure 5 qui est une vue de côté, en coupe axiale, d'une machine utilisée pour la fabrication de chocolat au lait.

Comme précédemment, le transporteur à vis comprend deux vis 3 et 3' entraînées en rotation à l'intérieur d'un fourreau allongé 2. La pâte raffinée sortant du broyeur à rouleaux 14 et contenant du lait en poudre, du sucre pulvérisé et du cacao, est introduite dans la trémie d'alimentation 20 et entraînée par les vis qui, dans la zone d'alimentation A, sont munies de filets à pas large.

Comme précédemment, la zone de traitement B comprend une première section de compression progressive B1 munie de filets à pas resserré et une section de freinage B2 constituée de disques malaxeurs excentrés. Comme on le voit sur la figure 6, qui est une vue en coupe transversale, les disques malaxeurs sont des disques circulaires juxtaposés 6, 6' dont les centres 60 sont décalés angulairement de façon à suivre une ligne tournant en hélice autour de l'axe de la vis. La matière passe ainsi par un espace tournant en hélice et elle est écrasée en même temps contre les parois du fourreau. En réglant le nombre et l'excentrement des disques malaxeurs, on peut contrôler l'intensité des efforts de laminage et de cisaillement qui se produisent et en particulier l'espace 61 de passage de la matière peut tourner autour de l'axe en sens inverse du sens de rotation des vis de façon à provoquer un effort de freinage accru et par conséquent une augmentation du temps de passage.

On peut également, pour diminuer les effets de cisaillement, supprimer le diaphragme 8 et faire déboucher directement la section de freinage B2 dans la section de dégazage C qui, comme précédemment, comporte des filets à pas élargi dans lesquels peut s'étaler la matière sortant des disques malaxeurs.

On peut ainsi soumettre la pâte à des effets de laminage et de cisaillement modérés mais suffisants pour provoquer la dispersion des particules solides dans la matière grasse sans échauffer sensiblement la matière et, d'ailleurs, il peut être nécessaire, au lieu de refroidir le fourreau, de le réchauffer par circulation d'un fluide caloporteur à une température de l'ordre de 60 à 70°C.

Etant donné la modération du travail de malaxage, il est généralement nécessaire d'effectuer le conchage à sec en au moins deux zones de traitement successives, ce qui permet, comme on l'a vu, d'effectuer le dégazage dans les meilleures conditions. Comme indiqué plus haut, l'efficacité du dégazage et la qualité de la pâte peuvent être observés, au cours du traitement, par les orifices de dégazage 23.

A la sortie de la seconde zone de freinage C', la matière passe dans la dernière section D du transporteur à vis où l'on introduit du beurre de cacao par l'orifice 28 pour effectuer le traitement de liquéfaction. Compte tenu de l'abaissement de viscosité dû à l'addition de beurre de cacao, il est normalement possible, dans cette section, de faire passer la pâte dans une section à filets inversés D2 où se produisent principalement les effets de laminage et de cisaillement nécessaires à l'homogénéisation de la pâte. Dans cette zone, une circulation de fluide caloporteur par les canaux 42 permet de maintenir la pâte à une température inférieure à 70°C.

Un refroidissement plus intense permettrait d'ailleurs d'amener la pâte à la sortie 27 du transporteur à vis à une température pouvant descendre jusqu'au dessous de 30°C. Il est donc réaliser le tempérage de la pâte de chocolat à l'intérieur même du transporteur à vis de façon à mouler la pâte directement à la sortie. Ainsi, tout en respectant les étapes du procédé classique, c'est à dire un conchage à sec, un conchage liquide et un tempérage, l'ensemble des opérations suivant le raffinage est exécuté en continu et un temps court à l'intérieur d'une même machine très peu encombrante puisque l'on peut obtenir un débit de 20 kg/h avec une machine ayant une longueur inférieure à 2 mètres.

## Revendications

1. Procédé de préparation d'une pâte de chocolat dans lequel les différents ingrédients comprenant au moins du cacao et du sucre pulvérisé sont soumis à des opérations de broyage jusqu'à un degré de granulométrie déterminé, de fluidification par dispersion des particules de sucre et de cacao dans une phase grasse continue et de dégazage pour l'élimination de l'eau et des composés volatils indésirables jusqu'à l'obtention d'une pâte raffinée, ledit procédé étant réalisé dans un transporteur à vis comprenant un fourreau allongé (2) entourant au moins deux vis de transport (3) à axes parallèles entraînées en rotation et muni de moyens de réglage (41, 42) de la température de la matière entraînée, lesdites vis étant composées de tronçons juxtaposés de caractéristiques différentes déterminant des effets différents, caractérisée par le fait qu'on réalise dans le transporteur à vis (2) un traitement de conchage à sec de la pâte raffinée comprenant une première étape (A) ce simple malaxage de la pâte raffinée avec élévation de température puis au moins une seconde étape (B) de malaxage avec production d'effets de laminage et de cisaillement dont l'intensité augmente progressivement, chaque étape (B) de malaxage comprenant une section de compression et une section de freinage suivie d'une étape de dégazage (C), l'intensité desdits effets de laminage et de cisaillement étant déterminée de telle sorte que les moyens de réglage (41, 42) de la température de la matière permettent de maintenir cette dernière au niveau optimal de conchage et de conserver la granulométrie, puis on soumet la pâte obtenue à un traitement de conchage liquide réalisé par effets combinés de malaxage, laminage et cisaillement et à température contrôlée au niveau optimal de conchage, dans une étape supplémentaire (D) du transporteur à vis dans laquelle sont introduites les quantités nécessaires de beurre de cacao et d'additifs.

2. Procédé de préparation de chocolat selon la revendication 1, caractérisé par le fait que le traitement de conchage à sec est réalisé progressivement dans plusieurs zones de traitement successives comprenant chacune un secteur de malaxage (B) et un secteur de dégazage (C).

3. Procédé de préparation de chocolat selon la revendication 1, caractérisé par le fait que, les vis (3) étant composées de tronçons juxtaposés de caractéristiques différentes déterminant des effets différents pour une pâte raffinée donnée de qualité homogène, la composition, la longueur et le nombre des zones de traitement sont déterminées empiriquement par des essais successifs pour une vitesse moyenne de rotation de vis (3), de telle sorte que la température de la matière puisse être maintenue en chaque point au niveau voulu par l'effet combiné de l'auto-échauffement dû aux frottements et de la régulation de la température du transporteur à vis et qu'on poursuit ensuite la production de la pâte, en jouant sur la vitesse de rotation des vis et sur la régulation de la température et en contrôlant d'une part le dégagement de l'eau et des arômes indésirables par les zones de dégazage et d'autre part le goût et la granulométrie de la pâte à la sortie du transporteur à vis.

4. Procédé de préparation de chocolat selon l'une des revendications précédentes, caractérisé par le fait que la régulation de température de la matière est réalisée par circulation d'un fluide caloporteur dans les parties du transporteur à vis au contact de la pâte, et au moins le long du fourreau (2).

5. Procédé de préparation de chocolat selon l'une des revendications précédentes caractérisé par le fait que le dégazage est produit par détente de la pâte dans une section (C) du transporteur à vis placée à l'aval de chaque zone de traitement (8) et dans laquelle les vis (3) sont munies de filets (31) à pas large de transport de la matière sans compression et le fourreau (2) est muni d'au moins un orifice (23) d'aspiration des gaz se dégageant de la pâte.

6. Procédé de préparation de chocolat selon la revendication 5, caractérisé par le fait qu'à la fin de chaque étape de malaxage (8), la pâte est mise sous forme de filaments (9) qui passent ensuite dans la section de dégazage (C) suivante.

7. Installation de préparation en continu de chocolat comprenant des moyens de broyage (11 12, 13, 14) de mélange et de raffinage des ingrédients constitués au moins de cacao et de sucre, des moyens de fluidification par dispersion des particules de cacao et de sucre dans une phase grasse continue et des moyens de dégazage par évaporation d'eau et de composés volatils indésirables, ladite installation étant constituée par un transporteur à vis comprenant un fourreau allongé (2) entourant au moins deux vis (3) à axes parallèles composées de tronçons juxtaposés de caractéristiques différentes déterminant des effets différents, des moyens (20) d'entraînement en rotation des vis à vitesse réglable, autour de leurs axes et des moyens (4) de réglage de la température de la matière entraînée dans les vis, caractérisée par le fait que le transporteur à vis (2) constitue, en aval des moyens (14) de raffinage, un circuit de production continue comprenant un moyen de conchage à sec de la pâte raffinée et un moyen de conchage liquide par incorporation d'adjuvants dont la nature et les proportions correspondent à la recette, le transporteur à vis (2) étant alimenté en continu par un débit déterminé de pâte raffinée jusqu'au degré de granulométrie nécessaire pour le produit fini et comprenant, de l'amont à l'aval, une zone (A) d'alimentation et de malaxage préliminaire munie de moyens (41) de chauffage de la pâte et au moins une zone de traitement (B) munie de moyens (31) de laminage et de cisaillement dont l'efficacité augmente progressivement et de moyens (4) de régulation de la température, chaque zone de traitement (B) comprenant une section de compression et une section de freinage suivie d'une zone de dégazage (C), puis d'une zone (D) de traitement finale du transporteur à vis réalisée par effets combinés de malaxage, laminage et cisaillement, et placée en aval de la dernière zone de dégazage (C') et à l'entrée de laquelle le fourreau (2) est muni d'au moins un orifice (28) d'introduction des adjuvants de liquéfaction.

8. Installation de préparation de chocolat selon la revendication 7, caractérisée par le fait que le transporteur a vis englobe l'ensemble de la zone d'alimentation (A), des zones de traitement (B) et des zones de dégazage (C) à l'intérieur d'un fourreau unique (2), les vis (3) étant munies, dans chaque zone de dégazage (C) de filets (31) à pas large d'entraînement vers l'aval sans compression, sur lesquels s'ouvre au moins un orifice de dégazage (23).

9. Installation de préparation de chocolat selon la revendication 7, caractérisée par le fait que les moyens (4) de réglage de la température de la pâte comprennent des canaux (42) de circulation d'un fluide caloporteur ménagés par zones dans le fourreau (2) du transporteur à vis et des moyens (40) de réglage du débit dans chaque zone.

10. Installation de préparation de chocolat selon la revendication 7, caractérisée par le fait que les vis (3) sont constituées de tronçons juxtaposés à pas variés comprenant, dans la zone d'alimentation (A), des filets (310) à pas large d'entraînement de la pâte vers l'aval sans compression et, dans chaque zone de traitement (8), une section de compression (B1) munie de filets (311) dont le pas se resserre et une section de freinage (B2)

11. Installation de préparation de chocolat selon la revendication 10, caractérisée par le fait que, dans la section de freinage (B2), les vis (3) sont constituées de disques excentrés et juxtaposés (6) dont les centres (60) sont placés sur une ligne tournant en hélice autour de l'axe de la vis.

12. Installation de préparation de chocolat selon la revendication 10, caractérisée par le fait que, dans la section de freinage (B2), les vis (3) sont munies de filets (31) à pas inversé par rapport au pas d'entraînement vers l'aval et munis d'ouvertures (32) de passage contrôlé de la matière vers l'aval.

13. Installation de préparation de chocolat selon la revendication 8, caractérisée par le fait que le transporteur à vis (2) comprend, entre chaque zone de traitement (B) et la zone (C) de dégazage suivante, un dispositif de filage constitué d'un diaphragme (8) dans lequel sont ménagés des orifices (80) pour la formation de fils (9) qui traversent la partie amont de la zone de dégazage au contact d'un courant de gaz circulant dans cette dernière, avant d'être remélangés par la rotation des vis (3).

**Patentansprüche**

1. Verfahren zur Herstellung einer Schokoladenmasse, indem die verschiedenen Bestandteile, wie zumindest Kakao und gepulverter Zucker, bis auf eine bestimmte Korngröße gemahlen werden, durch Dispergieren der Zucker- und Kakaoteilchen in einer kontinuierlichen fetthaltigen Phase fluidisiert und durch Entfernen von Wasser und unerwünschten flüchtigen Verbindungen zu einer raffinierten Masse entgast werden, wobei das Verfahren in einem Schneckenförderer mit einem länglichen Gehäuse (2) um mindestens zwei Förderschnecken (3) mit parallelen Drehachsen und Regelvorrichtungen (41, 42) für die Temperatur der beförderten Masse durchgeführt wird und die Schnecken aus nebeneinanderliegenden Abschnitten mit unterschiedlichen, verschiedene Wirkungen bestimmenden Merkmalen bestehen,
gekennzeichnet durch
eine Trockenbehandlung der raffinierten Masse im Schneckenförderer (2) zur Bildung von Muscheln,
-in einem ersten Abschnitt (A) zum einfachen Verkneten der raffinierten Masse bei steigender Temperatur,
-in mindestens einem zweiten Abschnitt (B) zum Verkneten unter Bildung von Walz- und Scherwirkungen mit allmählich steigender Intensität, wobei jeder Verknetabschnitt (B) einen Verdichtungs- und einen Bremsungsabschnitt umfaßt,
- in einem Entgasungsabschnitt (C), wobei die Intensität der Walz- und Scherwirkungen so bestimmt ist, daß die Temperaturregelvorrichtungen (41, 42) für die Masse diese auf dem optimalen Niveau zur Muschelbildung und zur Erhaltung der Korngröße halten können, und
eine Flüssigbehandlung der erhaltenen Masse durch kombiniertes Verkneten, Walzen und Scheren bei einer für die Bildung der Muscheln optimalen, geregelten Temperatur in
-einem zusätzlichen Abschnitt (D) des Schneckenförderers, in den die notwendigen Mengen an Kakaobutter und Hilfsstoffen eingeführt werden.

2. Verfahren zur Herstellung von Schokolade nach Anspruch 1,
dadurch gekennzeichnet,
daß die Trockenbehandlung zur Bildung von Muscheln fortschreitend in mehreren aufeinanderfolgenden Behandlungszonen mit je einem Verknetabschnitt (B) und einem Entgasungsabschnitt (C) durchgeführt wird.

3. Verfahren zur Herstellung von Schokolade nach Anspruch 1,
dadurch gekennzeichnet,
daß die Schnecken (3) aus nebeneinanderliegenden Abschnitten mit unterschiedlichen, für eine bestimmte raffinierte Masse von homogener Qualität verschiedene Wirkungen bestimmenden Merkmalen bestehen und die Zusammensetzung, die Länge und die Anzahl der Behandlungszonen empirisch durch aufeinanderfolgende Versuche bei einer mittleren Drehgeschwindigkeit der Schnecken (3) so bestimmt werden, daß die Temperatur der Masse in jedem Punkt auf einem bestimmten Niveau gehalten werden kann durch kombinierte Wirkung der auf der Reibung beruhenden Selbsterwärmung und der Temperaturregelung des Schneckenförderers, und die Herstellung der Masse durch Abstimmen der Drehgeschwindigkeit der Schnecken und der Temperaturregelung und durch Kontrolle einerseits der Freisetzung von Wasser und unerwünschten Aromastoffen in den Entgasungszonen und andererseits des Geschmacks und der Korngröße der Masse am Ausgang des Schneckenförderers weiter durchgeführt wird.

4.Verfahren zur Herstellung von Schokolade nach einem der vorstehenden Ansprüche,
dadurch gekennzeichnet,
daß die Temperaturregelung der Masse durch Zirkulieren eines Kühlmittels in den mit der Masse in Berührung stehenden Teilen des Schneckenförderers und zumindest entlang des Gehäuses (2) durchgeführt wird.

5. Verfahren zur Herstellung von Schokolade nach einem der vorstehenden Ansprüche,
dadurch gekennzeichnet,
daß die Entgasung durch Entspannen der Masse im Abschnitt (C) des Schneckenförderers, der sich stromabwärts jeder Behandlungszone (B) befindet und in dem die Schnecken (3) mit großen Gewinden (31) zum Transport der Materie ohne Verdichtung ausgerüstet sind, und das Gehäuse (2) mindestens eine, sich auf die Masse öffnende Gasansaugöffnung (23) aufweist.

6. Verfahren zur Herstellung von Schokolade nach Anspruch 5,
dadurch gekennzeichnet,
daß die Masse am Ende jedes Verknetabschnitts (B) in Fäden (9) ausgebildet wird, die in den folgenden Entgasungsabschnitt (C) eingebracht werden.

7. Vorrichtung zur kontinuierlichen Herstellung von Schokolade mit Mitteln zum Mahlen (11, 12, 13, 14), Vermischen und Raff inieren der zumindest aus Kakao und Zucker bestehenden Bestandteile, Mitteln zur Fluidisierung durch Dispergieren der Kakao- und Zuckerteilchen in einer kontinuierlichen fetthaltigen Phase und Mittel zur Entgasung durch Verdampfen von Wasser und der unerwünschten flüchtigen Bestandteile, mit
- einem Schneckenförderer mit einem länglichen Gehäuse (2) um mindestens zwei Schnecken (3) mit parallelen Achsen, aus nebeneinanderliegenden Abschnitten mit unterschiedlichen, verschiedene Wirkungen bestimmenden Merkmalen,
- Vorrichtungen (20) zum Drehen der Schnecken mit regulierbarer Geschwindigkeit um ihre Achsen und
- Vorrichtungen (4) zur Temperaturregelung der durch die Schnecken beförderten Masse,
dadurch gekennzeichnet,
daß der Schneckenförderer (2) stromabwärts der Raffinationsvorrichtungen (14) einen kontinuierlichen Herstellungskreis bildet mit einer Trockenbehandlungsvorrichtung der raffinierten Masse zur Bildung von Muscheln und einer Flüssigbehandlungsvorrichtung zur Bildung von Muscheln durch Einbringen von Hilfsstoffen, deren Art und Mengen dem Rezept entsprechen, wobei der Schneckenförderer (2) kontinuierlich mit einem bestimmten Durchsatz der raffinierten Masse bis zur für das Endprodukt notwendigen Korngröße versorgt wird und von oben nach unten folgende Abschnitte umfaßt:
-eine Versorgungs- und Vorverknetzone (A) , die mit Heizvorrichtungen (41) für die Masse ausgerüstet ist,
- mindestens eine Behandlungszone (B), die Vorrichtungen (31) zum Walzen und Scheren mit allmählich steigender Wirksamkeit aufweist, und
-Temperaturregelvorrichtungen (4),
wobei jede Behandlungszone (B) einen Verdichtungsund einen Bremsungsabschnitt aufweist, auf die eine Entgasungszone (C) und dann eine Endbehandlungszone (D) des Schneckenförderers folgt, in der die Wirkungen des Verknetens, Walzens und Scherens kombiniert werden und die sich stromabwärts der letzten Entgasungszone (C') befindet und an deren Eingang das Gehäuse (2) mindestens eine Einführungsöffnung (28) für Verflüssigungshilfsstoffe aufweist.

8. Vorrichtung zur Herstellung von Schokolade nach Anspruch 7,
dadurch gekennzeichnet,
daß der Schneckenförderer die Versorgungszone (A), die Behandlungszonen (B) und die Entgasungszonen (C) im Inneren des einzigen Gehäuses (2) umfaßt, wobei die Schnecken (3) in jeder Entgasungszone (C) mit großen Gewinden (31) zur Stromabwärtsbeförderung ohne Verdichtung ausgerüstet sind, auf die sich mindestens eine Entgasungsöffnung (23) öffnet.

9. Vorrichtung zur Herstellung von Schokolade nach Anspruch 7,
dadurch gekennzeichnet,
daß die Temperaturregelungsvorrichtungen (4) der Masse Zirkulationskanäle (42) eines Kühlmittels, die in Zonen im Gehäuse (2) des Schneckenförderers angeordnet sind, und Durchsatzregelvorrichtungen (40) in jeder Zone umfassen.

10. Vorrichtung zur Herstellung von Schokolade nach Anspruch 7,
dadurch gekennzeichnet,
daß die Schnecken (3) aus nebeneinanderliegenden Abschnitten mit verschiedenen Gewinden bestehen und in der Versorgungszone (A) große Gewinde (310) zur Beförderung der Masse stromabwärts ohne Verdichtung und in jeder Behandlungszone (B) einen Verdichtungsabschnitt (B1) mit sich verkleinernden Gewinden (311) und einen Bremsungsabschnitt (B2) umfassen.

11. Vorrichtung zur Herstellung von Schokolade nach Anspruch 10,

dadurch gekennzeichnet,

daß im Bremsungsabschnitt (B2) die Schnecken (3) aus exzentrischen und nebeneinanderliegenden Scheiben (6) bestehen, deren Zentren (60) sich auf einer sich schraubenförmig um die Schneckenachse drehenden Linie befinden.

12. Vorrichtung zur Herstellung von Schokolade nach Anspruch 10,

dadurch gekennzeichnet,

daß im Bremsungsabschnitt (B2) die Schnecken (3) mit zum stromabwärts gerichteten Fördergewinde umgekehrten Gewinden (31) und mit Öffnungen (32) zur Kontrolle des stromabwärts gerichteten Massendurchsatzes ausgerüstet sind.

13. Vorrichtung zur Herstellung von Schokolade nach Anspruch 8,

dadurch gekennzeichnet,

daß der Schneckenförderer (2) zwischen jeder Behandlungszone (B) und der darauffolgenden Entgasungszone (C) eine Spinnvorrichtung mit einem Diaphragma (8) mit Öffnungen (80) zur Bildung von Fäden (9) aufweist, die durch den oberen Teil der Entgasungszone mit dem in dieser Zone zirkulierenden Gasstrom passieren, bevor sie durch die sich drehenden Schnecken (3) wieder eingemischt werden.

## Claims

1. Process for preparing a chocolate paste in which the different ingredients comprising at least cocoa and powdered suger are subjected to operations of crushing until a given size of particles is obtained, fluidification by dispersion of the particles of sugar and cocoa in a continuous fatty phase and degasing for eliminating water and undesirable volatile compounds until a refined paste is obtained, said process being carried out in a screw conveyor comprising an elongate barrel (2) surrounding at least two conveyor screws (3) having parallel axes, driven in rotation and provided with means (41, 42) for regulating the temperature of the material driven along, said screws being composed of juxtaposed sections of different characteristics determining different effects, characterised in that it comprises effecting in the screw conveyor (2) a dry conching treatment of the refined paste comprising a first step (A) of a simple kneading of the refined paste with elevation of temperature then at least a second kneading step (2) with production of drawing and shearing effects the intensity of which gradually increases, each kneading step (B) comprising a compression section and a retarding section followed by a degasing step (C), the intensity of said drawing and shearing effects being so determined that the means (41, 42) for determining the temperature of the material permit maintaining the latter at the optimum level of conching and preserving the particle size, then subjecting the paste obtained to a liquid conching treatment achieved by combined effects of kneading, drawing and shearing and at a temperature controlled at the optimum level of conching, in an additional step (D) of the screw conveyor in which the required quantities of cocoa-butter and additives are introduced.

2. Process for preparing chocolate according to claim 1, characterised in that the dry conching treatment is carried out progressively in a plurality of successive treating zones each comprising a kneading section (D) and a degasing section (C).

3. Process for preparing chocolate according to claim 1, characterised in that, as the screws (3) are composed of juxtaposed sections having different characteristics determining different effects for a given refined paste of homogeneous quality, the composition, the length and the number of the treating zones are determined experimentally by successive trials for a mean velocity of rotation of the screws (3), so that the temperature of the material may be maintained at each point at the required level by the combined effect of the self-heating due to friction and the regulation of the temperature of the screw conveyor and the production of the paste is then continued by acting on the velocity of rotation of the screws and on the regulation of the temperature and by controlling, on one hand, the discharge of water and the undesirable aromas through the degasing zones, and, on the other hand, the taste and the particle size of the paste at the outlet cf the screw conveyor.

4. Process for preparing chocolate according to one of the preceding claims, characterised in that the regulation of the temperature of the material is achieved by circulation of a heat-carrying fluid in the parts of the screw conveyor in contact with the paste and at least along the barrel (2).

5. Process for preparing chocolate according to one of the preceding claims, characterised in that the degasing is carried out by expansion of the paste in a section (C) of the screw conveyor located on the downstream side of each treating zone (B) and in which the screws (3) are provided with flights (31) of large pitch for conveying the material without compression and the barrel (2) is provided with at least one orifice (23) for the aspiration of the gases emanating from the paste.

6. Process for preparing according to claim 5, characterised in that, at the end of each kneading step (B), the paste is put into the form of filaments (9) which thereafter pass into the following degasing section (C).

7. Installation for continuously preparing chocolate comprising means (11, 12, 13, 14) for crushing, mixing and refining the ingredients consisting of at least cocoa and sugar, fluidification means operative by dispersion of the particles of cocoa and sugar in a continuous fatty phase, and degasing means operative by evaporation of water and the undesirable volatile compounds, said installation being constituted by a screw conveyor comprising an elongated barrel (2) surrounding at least two screws (3) having parallel axes and composed of juxtaposed sections having different characteristics determining different effects, means (20) for driving in rotation the screws at an adjustable velocity around their axes, and means (4) for regulating the temperature of the material driven along in the screws, characterised in that the screw conveyor (2) constitutes, on the downstream side of refining means (14), a continuous production circuit comprising means for effecting a dry conching of the refined paste and means for effecting a liquid conching by incorporation of adjuvants, the nature and proportions of which correspond to the recipe, the screw conveyor (2) being continuously fed at a given rate of flow with refined paste up to the particle size necessary for the finished product and comprising, in the direction from the downstream end to the upstream end, a supply and preliminary kneading zone (A) provided with means (41) for heating the paste and at least a treatment zone (B) provided with means (31) for drawing and shearing the effectiveness of which progressively increases, and means (4) for regulating the temperature, each treatment zone (B) comprising a compression section and a retarding section followed by a degasing zone (C), then a final treatment zone (D) of the screw conveyor operative by combined effects of kneading, drawing and shearing, and placed on the downstream side of the last degasing zone (C') and at the entrance of which the barrel (2) is provided with at least one orifice (28) for introducing liquefaction adjuvants.

8. Installation for preparing chocolate according to claim 7, characterised in that the screw conveyor encompasses the whole of the supply zone (A), the treating zones (B) and the degasing zones (C) inside a single barrel (2), the screw (3) being provided, in each degasing zone (C), with largepitch flights (31) for driving in the downstream direction without compression, onto which opens at least one degasing orifice (23).

9. Installation for preparing chocolate according to claim 7, characterised by the fact that the means (4) for regulating the temperature of the paste comprise passageways (42) for the circulation of a heat-carrying fluid defined by zones in the barrel (2) of the screw conveyor and means (40) for regulating said rate of flow in each zone.

10. Installation for preparing chocolate according to claim 7, characterised in that the screws (3) are constituted by juxtaposed sections having varying pitches and comprising in the supply zone (A), large-pitch flights (310) for driving the paste in the downstream direction without compression and, in each treatment zone (8), a compression section (B1) provided with flights (311) whose pitch narrows and a retarding section (B2).

11. Installation for preparing chocolate according to claim 10, characterised in that, in the retarding section (B2), the screws (3) are constituted by eccentric and juxtaposed discs (6) the centres (60) of which are located on a line turning in the form of a helix around the axis of the screw.

12. Installation for preparing chocolate according to claim 10, characterised in that, in the retarding section (B2), the screws (3) are provided with flights (31) whose pitch is reversed relative to the pitch for driving in the downstream direction and provided with openings (32) providing a controlled passage in the downstream direction of the material.

13. Installation for preparing chocolate according to claim 8, characterised in that the screw conveyor (2) comprises, between each treating zone (B) and the following degasing (C), a drawing device constituted by a diaphragm (8) in which are provided orifices (80) for forming threads (9) which travel through the upstream part of the degasing zone in contact with a gas current circulating in the latter, before being remixed by the rotation of the screws (3).

Fig.1

Fig.4

Fig.2

Fig.3

0 140 729

Fig.5

Fig.6